# EUROPEAN PATENT APPLICATION

(11) **EP 2 261 839 A1**
(43) Date of publication of application: **15.12.2010**
(21) Application number: 10165459.8
(22) Date of filing: 10.06.2010
(51) Int. Cl.: G06K 9/00, G07C 9/00

(54) **Biometric matching system and biometric matching method**

(30) Priority: 12.06.2009 JP 2009141520
(71) Applicant: Glory Ltd., Himeji, Hyogo 670-8567 (JP)
(72) Inventor: Kuwahara, Yasushi, Hyogo, 670-8567 (JP)
(74) Representative: Schwabe - Sandmair - Marx

(57) **Abstract**

A biometric matching system is configured such that group information (42b) indicating a pre-defined group to which an identification terminal device belongs is stored, matching biometric information on a specific person to be identified is registered in an identification terminal device belonging to a predetermined group based on the group information (42b) when a predetermined registration condition is satisfied, and the matching biometric information registered in the identification terminal device is deleted when a predetermined deletion condition is satisfied.

## Description

### TECHNICAL FIELD

The present invention relates to a biometric matching system that includes an identification terminal device for acquiring biometric information from a person to be identified and a server device for storing matching biometric information registered in advance, and that is configured to match the biometric information acquired from the person to be identified with the matching biometric information. The present invention also relates to a biometric matching method implemented by the biometric matching system.

### BACKGROUND ART

In recent years, with the aim of preventing leakage of personal information such as customer information, business enterprises such as companies have installed a system for a person entering and leaving a room to perform biometric identification by matching biometric information on a person to be identified, e.g., image information obtained by imaging a face of an identification target person by a camera, with biometric information registered in advance, to thereby enhance the security in the business enterprises.

For example, Japanese Patent No. 4157322 discloses a technology in which a management apparatus that manages biometric information on all employees distributes biometric information on grouped employees to each identification apparatus belonging to each group, and each identification apparatus performs identification by using the distributed biometric information.

Here, the identification apparatus is an apparatus that performs biometric identification by comparing and matching, for example, biometric information, which is image information obtained by imaging a face or an eyeball of an identification target person by a camera equipped on the identification apparatus, with biometric information registered in advance.

Furthermore, Japanese Laid-open Patent Publication No. 2006-104647 discloses a technology for restricting permission to enter a room by pre-registering information about permission to enter a room for each location where the identification apparatus is installed, e.g., for each entrance of a business office and each entrance of each floor, when biometric information used for user identification is registered in the identification apparatus.

However, in the above-mentioned conventional system for performing the biometric identification, because biometric information on all users who use an identification apparatus is distributed in advance to the identification apparatus, there is a problem in that each identification apparatus needs to include a larger-capacity memory device as the number of users increases.

Furthermore, there is another problem in that identification speed is decreased because of increase in the number of pieces of biometric information to be matched. Moreover, in some cases, the number of pieces of biometric information may exceed the number able to be registered in the memory device of the identification apparatus.

In view of the above, there is a growing demand for a biometric matching system and a biometric matching method capable of reducing memory capacity necessary for each identification apparatus and increasing processing speed of the biometric identification without reducing convenience for a person to be identified.

### DISCLOSURE OF INVENTION

It is an object of the present invention to at least partially solve the problems in the conventional technology.

A biometric matching system according to an aspect of the present invention is to perform matching between biometric information and matching biometric information. The biometric matching system includes an identification terminal device that acquires biometric information from a person to be identified; a server device that stores therein the matching biometric information registered in advance; a group-information storage unit that stores therein group information indicating a pre-defined group to which the identification terminal device belongs; a registration control unit that registers, when a predetermined registration condition is satisfied, matching biometric information on a specific person to be identified in an identification terminal device belonging to a predetermined group based on the group information; and a deletion control unit that deletes, when a predetermined deletion condition is satisfied, the matching biometric information registered in the identification terminal device by the registration control unit.

A biometric matching method according to another aspect of the present invention is to perform matching between biometric information acquired from a person to be identified by an identification terminal device and matching biometric information stored in a server device. The biometric matching method includes storing group information indicating a pre-defined group to which the identification terminal device belongs; registering, when a predetermined registration condition is satisfied, matching biometric information on a specific person to be identified in an identification terminal device belonging to a predetermined group based on the group information; and deleting, when a predetermined deletion condition is satisfied, the matching biometric information registered in the identification terminal device.

The above and other objects, features, advantages and technical and industrial significance of this invention will be better understood by reading the following detailed description of presently preferred embodiments of the invention, when considered in connection with the accompanying drawings.

### BRIEF DESCRIPTION OF DRAWINGS

FIG. 1 is a diagram illustrating an outline of a biometric matching method according to the present invention.
FIG. 2 is a block diagram illustrating configurations of a registration terminal and a general terminal included in a biometric matching system according to an embodiment.
FIG. 3 is a block diagram illustrating a configuration of a deletion terminal included in the biometric matching system according to the embodiment.
FIG. 4 is a block diagram illustrating a configuration of a management apparatus included in the biometric matching system according to the embodiment.
FIG. 5 is a diagram illustrating an example of a system configuration of the biometric matching system according to the embodiment.
FIG. 6 is a diagram illustrating an example of distribution destination information.
FIG. 7 is a sequence diagram illustrating a process procedure performed by the registration terminal and the management apparatus according to the embodiment.
FIG. 8 is a sequence diagram illustrating a process procedure performed by the general terminal and the management apparatus according to the embodiment.
FIG. 9 is a sequence diagram illustrating a process procedure performed by the deletion terminal and the management apparatus according to the embodiment.
FIGS. 10A to 10C are system configuration diagrams of a biometric matching system according to a modified example.
FIG. 11 is a diagram illustrating an example of biometric information.

### BEST MODE(S) FOR CARRYING OUT THE INVENTION

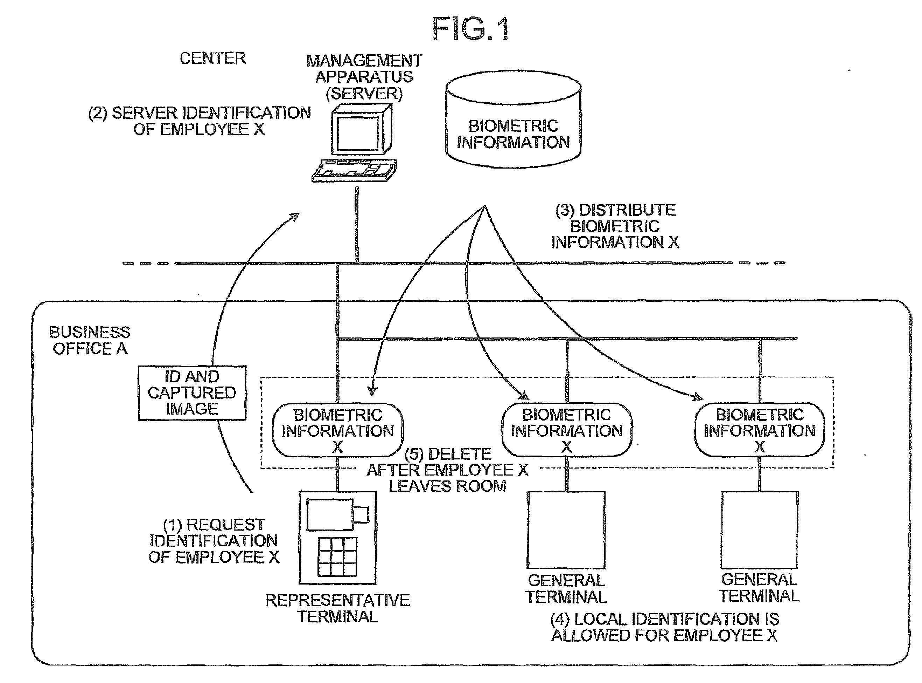

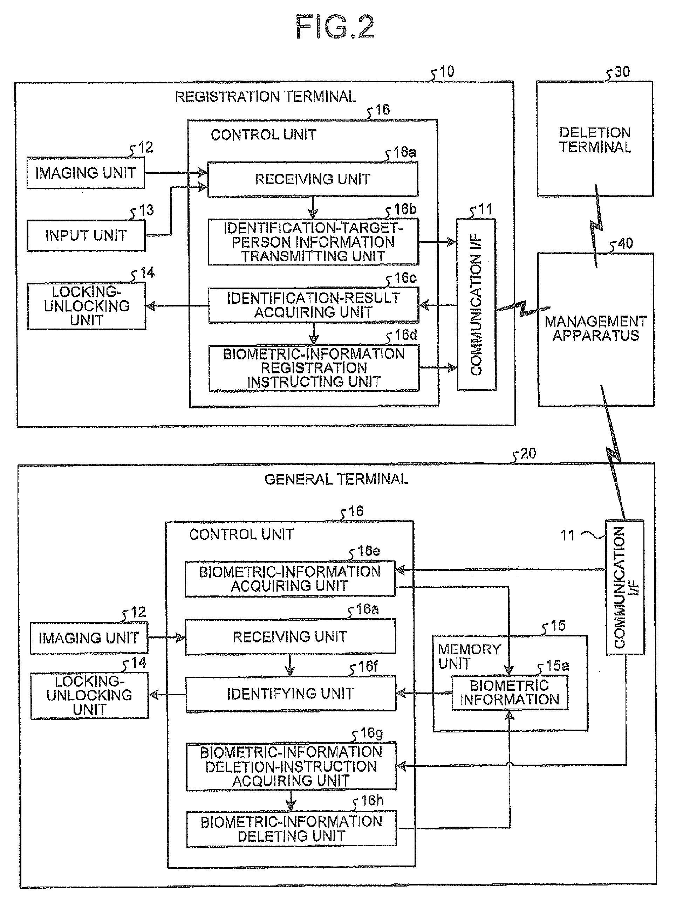

Exemplary embodiments of a biometric matching method according to the present invention will be explained in detail below with reference to the accompanying drawings. In the following, the outline of the biometric matching method according to the present invention will be explained first with reference to FIG. 1, and thereafter, embodiments of a biometric matching system to which the biometric matching method according to the present invention is applied will be explained with reference to FIGS. 2 to 11.

FIG. 1 is a diagram illustrating the outline of the biometric matching method according to the present invention. In FIG. 1, an example of a biometric matching system to which the biometric matching method is applied is illustrated. As illustrated in FIG. 1, the biometric matching system to which the biometric matching method according to the present invention is applied is mainly characterized in that it appropriately acquires from a server and stores therein biometric information on a person to be identified, which is to be matched with the biometric information when an identification apparatus performs biometric identification, and it deletes the biometric information when a predetermined condition is satisfied.

In the following, explanation is given on the assumption that there is a company having one center and a plurality of business offices. In other words, it is assumed that a management apparatus that manages biometric information on all employees is installed in the center and a plurality of identification apparatuses that performs identification of the employees is installed at doorways and inside of the business offices. It is also assumed that biometric information on employees who work full-time in each business office is registered in advance in each identification apparatus in each business office.

Furthermore, it is assumed that a plurality of the business offices as described above is located all over a country, and the center and each business office is connected to each other via a network such as a WAN (Wide Area Network). For example, as illustrated in the figure, a representative terminal as the identification apparatus and a plurality of general terminals are installed in a business office A, and they are connected to the management apparatus via a network.

It is assumed that the representative terminal is a terminal installed at a doorway of the business office A and having authority to perform identification at the time when an employee enters and leaves the business office A and to instruct registration and deletion of biometric information. It is also assumed that the general terminal is a terminal installed near a door of each room in the business office A and configured to perform identification at the time when an employee enters and leaves the room. The biometric information stored in each terminal contains biometric information on employees who work full-time in the business office A.

The management apparatus stores biometric information on all employees in its database, and is equipped with a function as a server to perform a process of identifying the employees based on the biometric information and a process of distributing the biometric information to each identification apparatus. The management apparatus stores therein biometric information associated with identifiers (hereinafter, described as "IDs") of the employees.

In the following, a case is explained in which the biometric identification is performed by face identification. More specifically, an image of a face portion stored as the biometric information and an image of a face portion captured by a camera equipped on each identification apparatus are compared with each other to determine whether or not an employee who has been imaged is identical to a registered person. As an identification method for the face identification, 1:1 identification (one to one identification) and 1:N identification (one to many identification) are applicable.

The 1:1 identification is a method of verifying identity based on an ID and a captured image. More specifically, when the identification is performed, biometric information corresponding to an ID input to the identification apparatus by an employee is retrieved, and the retrieved biometric information and a captured image are compared with each other to verify identity.

In such a 1:1 identification, because image information is compared on a one-to-one basis, identification speed is increased and identification accuracy is good. However, because a user needs to input own ID, convenience of a face identification system that is intrinsically able to perform non-contact identification is reduced.

In contrast, the 1:N identification is a method of performing identification based on a captured image. More specifically, a plurality of pieces (N) of biometric information is matched with a captured image and a similarity is calculated as a value indicating how much each piece of biometric information is similar to the captured image, and then it is determined to be an identical person when a piece of biometric information for which the calculated similarity is equal to or larger than a predetermined value is present and it is determined to be not an identical person when such a piece of biometric information is absent.

In such a 1:N identification, because one piece of image information is compared with N pieces of biometric information, if the number of persons whose biometric information is registered is increased, identification speed is decreased.

In the following, explanation is given of a process performed by the biometric matching system when an employee X who works in a place other than the business office A visits the business office A. First, when the employee X enters the business office A, the employee X inputs an ID and takes an image of his/her face with the representative terminal.

The representative terminal transmits the ID input by the employee X and the captured image to the management apparatus to thereby request the management apparatus to identify the employee X (see (1) of the figure).

On the other hand, the management apparatus performs server identification of the employee X by the 1:1 identification based on the received ID and the captured image (see (2) of the figure). Here, the server identification means identification performed by the management apparatus. Furthermore, local identification means identification performed by the representative terminal and the general terminals.

Then, when determining that the employee X is identical to a registered person as a result of success in the identification, the management apparatus distributes the biometric information on the employee X (in this example, assumed as biometric information X) to all terminals in the business office A (see (3) of the figure).

Thereafter, each terminal in the business office A additionally registers the biometric information X distributed by the management apparatus. Therefore, the general terminals in which the biometric information X is registered allow the local identification of the employee X (see (4) of the figure).

Then, when the employee X enters and leaves each room in the business office A, the general terminals perform the local identification by the 1:N identification in which an ID need not be input. Consequently, it is possible to take full advantage of the face identification system that is able to perform non-contact identification.

On the other hand, after the employee X has left the business office A, the biometric information X of the employee X in each terminal in the business office A is not needed. Therefore, when the employee X leaves, the representative terminal at the doorway performs the local identification, and, when the local identification is successful or after a predetermine time elapses since the local identification has been successful, all pieces of the biometric information X of the employee X registered in each terminal in the business office A are deleted (see (5) of the figure).

When the biometric information X is deleted from each terminal in the business office A in this manner, the employee X cannot successfully perform the biometric identification by the local identification in all identification apparatuses in the business office A. In other words, the employee X cannot enter and leave any rooms in the business office A unless he/she registers the biometric information X again.

In this manner, according to the present invention, registration and deletion are performed so that biometric information on a part-time employee is stored in each terminal only while the employee is in a business office. In other words, the 1:N identification in which load on a person to be identified is reduced can be employed as much as possible and the number of "N" in the 1:N identification can be reduced to the requisite minimum. Therefore, it is possible to increase the identification speed in the 1:N identification.

Furthermore, it is possible to prevent memory capacity of each terminal from being wasted due to biometric information on a part-time employee who may not make a visit again. In FIG. 1, a case is illustrated in which the representative terminal performs the 1:1 identification; however, the representative terminal may perform the 1:N identification. It is also possible to transmit only an ID from the representative terminal and perform the local identification by the 1:1 identification by using the biometric information X that is corresponding to the ID and is received from the management apparatus. In this case, when the identification is successful, the representative terminal or the management apparatus that is notified of success in the identification by the representative terminal distributes the biometric information X to all terminals in the business office.

As described above, according to the biometric matching method of the present invention, it is possible to reduce memory capacity necessary for each identification terminal and to increase processing speed of biometric identification without reducing convenience for a person to be identified. In the following, exemplary embodiments of the biometric matching system to which the biometric matching method according to the present invention is applied are described in detail.

Exemplary embodiments of the biometric matching system to which the biometric matching method according to the present invention is applied are explained in detail below with reference to the accompanying drawings. First, a configuration of the biometric matching system to which the biometric matching method according to the present invention is applied is explained with reference to FIGS. 2 to 4.

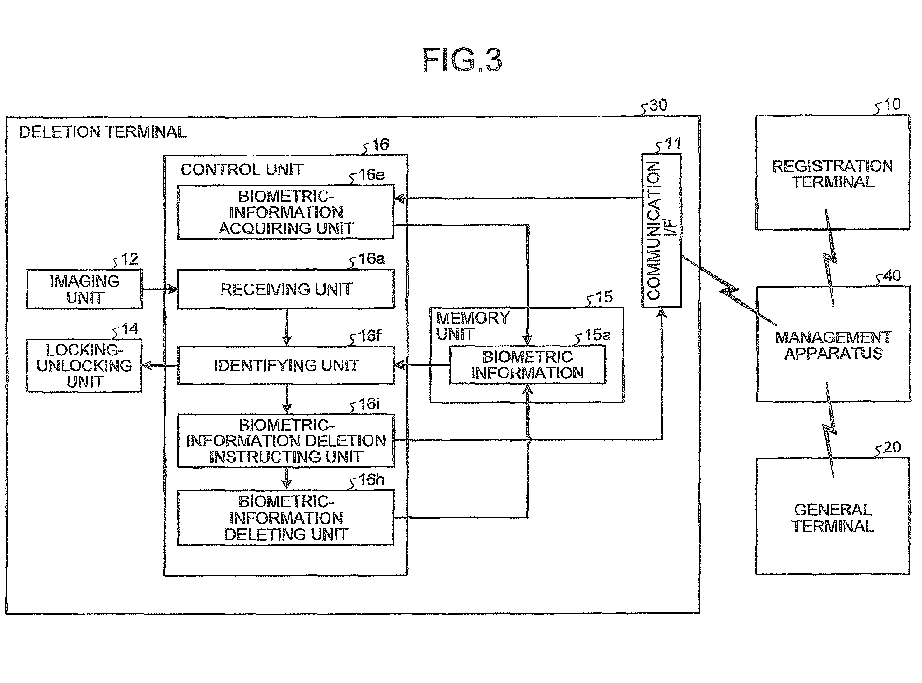

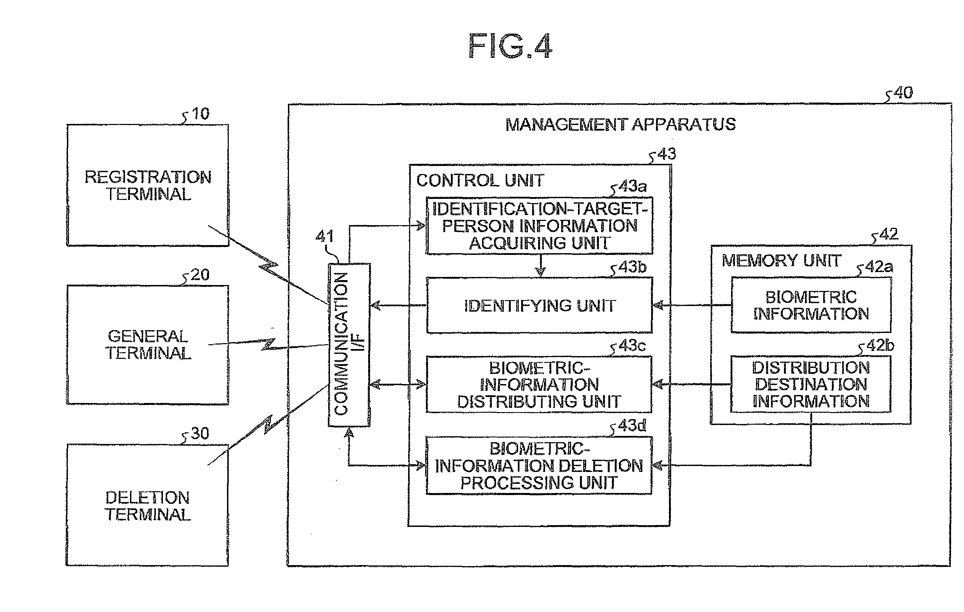

With the assumption that a registration terminal 10, a general terminal 20, and a deletion terminal 30 are connected to a management apparatus 40, the configurations of the registration terminal 10 and the general terminal 20 are explained with reference to FIG. 2, the configuration of the deletion terminal 30 is explained with reference to FIG. 3, and the configuration of the management apparatus 40 is explained with reference to FIG. 4.

The registration terminal 10 is a terminal having authority to instruct registration of biometric information among representative terminals. The deletion terminal 30 is a terminal having authority to instruct deletion of biometric information among representative terminals. The registration terminal 10 and the deletion terminal 30 also have functions of the general terminal 20. In the embodiment, the registration terminal 10 and the deletion terminal 30 are explained as independent terminals; however, they are not necessarily independent of each other, and may be integrated with each other.

FIG. 2 is a block diagram illustrating the configurations of the registration terminal 10 and the general terminal 20 included in the biometric matching system according to the embodiment. In FIG. 2, only components necessary for explaining characteristics of the registration terminal 10 and the general terminal 20 are selectively illustrated. While the registration terminal 10 also has the characteristics of the general terminal 20, the characteristics of the general terminal 20 will be described later.

The registration terminal 10 includes a communication I/F (interface) 11, an imaging unit 12, an input unit 13, a locking-unlocking unit 14, and a control unit 16. The control unit 16 includes a receiving unit 16a, an identification-target-person information transmitting unit 16b, an identification-result acquiring unit 16c, and a biometric-information registration instructing unit 16d.

The communication I/F 11 is formed of a communication device such as a LAN card, and enables communication with other devices via a network such as a LAN (Local Area Network) and a WAN. For example, the communication I/F 11 transmits and receives data between the registration terminal 10 and the management apparatus 40 to transmit information on a person to be identified from the registration terminal 10 so as to allow the management apparatus 40 to perform the server identification.

The imaging unit 12 is formed of an imaging equipment such as a CCD (Charge Coupled Devices) camera. For example, when the imaging unit 12 is a visible camera, it detects reflected visible light that is reflected light obtained by reflection of visible light applied by illumination from an object to be identified, and captures a visible image.

The input unit 13 includes an operation button, such as a numeric keypad and an alphabet keypad, for inputting an ID of a person to be identified. When identification is performed by the 1:1 identification, the input unit 13 receives input of an ID in order to acquire image information for matching associated with an ID contained in the biometric information.

The locking-unlocking unit 14 performs locking and unlocking according to a locking-unlocking instruction determined based on an identification result of the server identification performed by the management apparatus 40 by the 1:1 identification.

The receiving unit 16a is a processing unit that performs a process of receiving the captured image captured by the imaging unit 12 and the ID of a person to be identified, which is input from the input unit 13, and sending the captured image and the ID to the identification-target-person information transmitting unit 16b.

The identification-target-person information transmitting unit 16b is a processing unit that performs, when requesting the management apparatus 40 to perform identification, a process of transmitting the captured image and the ID of the person to be identified, which are received from the receiving unit 16a, to the management apparatus 40 via the communication I/F 11.

The identification-result acquiring unit 16c is a processing unit that performs a process of acquiring the identification result from the management apparatus 40 via the communication I/F 11. The identification-result acquiring unit 16c also performs a process of sending a locking-unlocking instruction to the locking-unlocking unit 14 according to the acquired identification result, and, when the identification result is successful, performs a process of sending a registration instruction of the biometric information to the biometric-information registration instructing unit 16d.

The biometric-information registration instructing unit 16d is a processing unit that performs, upon reception of the registration instruction of the biometric information from the identification-result acquiring unit 16c, a process of transmitting an instruction to the management apparatus 40 via the communication I/F 11 so as to register the biometric information on the person to be identified in each terminal.

Next, the general terminal 20 is explained below, in which components that perform the same functions as those of the registration terminal 10 are denoted by identical symbols, and only different functions are explained to describe the characteristics of the general terminal 20.

The general terminal 20 includes the communication I/F 11, the imaging unit 12, the locking-unlocking unit 14, a memory unit 15, and the control unit 16. The control unit 16 includes the receiving unit 16a, a biometric-information acquiring unit 16e, an identifying unit 16f, a biometric-information deletion-instruction acquiring unit 16g, and a biometric-information deleting unit 16h. The memory unit 15 stores therein biometric information 15a.

The communication I/F 11, the imaging unit 12, and the locking-unlocking unit 14 have the same functions as those of the registration terminal 10, and therefore, explanation thereof is omitted. The memory unit 15 is formed of a memory device such as a nonvolatile memory or a hard disk drive.

The memory unit 15 stores therein in advance, as the biometric information 15a, image information for matching on all employees who work full-time (hereinafter, referred to as "full-time employees") in a predetermined area where the registration terminal 10 and the general terminal 20 are installed, e.g., in the business office A.

Furthermore, when an employee who works in a place other than the business office A (hereinafter, referred to as a temporary user") visits the business office A and the server identification is successful, the memory unit 15 stores biometric information on the temporary user, which is distributed by the management apparatus 40, in the biometric information 15a.

The biometric-information acquiring unit 16e is a processing unit that performs a process of acquiring the biometric information on the temporary user, which is distributed by the management apparatus 40, via the communication I/F 11 and causing the memory unit 15 to store the biometric information as the biometric information 15a.

The receiving unit 16a is a processing unit that performs a process of receiving the captured image captured by the imaging unit 12 and sending the captured image to the identifying unit 16f.

The identifying unit 16f is a processing unit that performs a process of matching the acquired captured image with the image information for matching stored in the biometric information 15a, and performing the local identification by the "one-to-N identification" method. More specifically, the identifying unit 16f extracts feature amounts of the both images and calculates similarity being a value indicating how much the extracted feature amounts of the both images similar to each other,

Then, when there is image information for matching for which the calculated similarity of feature points is equal to or larger than a predetermined value, it is determined to be an identical person, and, when there is no such image information for matching, it is determined to be a non-identical person. When determining that the temporary user is an identical person, the identifying unit 16f determines that the identification is successful and sends an unlocking instruction to the locking-unlocking unit 14.

In the embodiment, a case is described in which the image information in the biometric information 15a and the captured image are compared with each other. However, it is possible to register a feature amount for matching calculated from the image information in the memory unit 15 instead of the image information, and cause the identifying unit 16f to calculate a feature amount for matching from the captured image and compare the calculated feature amount with the feature amount registered in the memory unit 15. In other words, it is possible to use the biometric image or a feature amount based on the biometric image (matching feature data) as the biometric information 15a.

The biometric-information deletion-instruction acquiring unit 16g is a processing unit that performs a process of acquiring a deletion instruction from the management apparatus 40 and sending the deletion instruction to the biometric-information deleting unit 16h. The biometric-information deleting unit 16h is a processing unit that performs a process of deleting the biometric information on the temporary user as a deletion target, from the memory unit 15 based on the acquired deletion instruction. Although it is assumed that the general terminal 20 performs the "one-to-N identification", the general terminal 20 may perform the "one-to-one identification". Even when either identification method is performed, it is possible to decrease memory capacity.

Next, the configuration of the deletion terminal 30 is explained with reference to FIG. 3. FIG. 3 is a block diagram illustrating the configuration of the deletion terminal 30 included in the biometric matching system according to the embodiment. Also in this case, components that perform the same functions as those of the general terminal 20 are denoted by identical symbols, and only different functions are described to explain characteristics of the deletion terminal 30. The deletion terminal 30 also has the characteristics of the general terminal 20, which are described above.

The deletion terminal 30 is different from the general terminal 20 in that it has a function of outputting a biometric-information deletion instruction, i.e., it includes a biometric-information deletion instructing unit 161 as illustrated in the figure. In FIG. 3, only components necessary for explaining the characteristics of the deletion terminal 30 are selectively illustrated.

The identifying unit 16f is a processing unit that performs matching between the acquired captured image and the image information for matching stored in the biometric information 15a and performs the local identification by the "one-to-N identification" method. When determining that the temporary user is an identical person, the identifying unit 16f determines that the identification is successful, sends an unlocking instruction to the locking-unlocking unit 14, and notifies the biometric-information deletion instructing unit 16i of the success in the biometric identification of the temporary user.

Upon reception of a notice of the success in the biometric identification of the temporary user, the biometric-information deletion instructing unit 16i transmits a deletion instruction to the management apparatus 40 to delete the biometric information 15a on the temporary user from the memory unit 15 of each terminal, and deletes the biometric information 15a on the temporary user from the memory unit 15 of own terminal.

Next, the configuration of the management apparatus 40 is explained with reference to FIG. 4. FIG. 4 is a block diagram illustrating the configuration of the management apparatus 40 included in the biometric matching system according to the embodiment. In FIG. 4, only components necessary for explaining characteristics of the management apparatus 40 are selectively illustrated.

The management apparatus 40 includes a communication I/F 41, a memory unit 42, and a control unit 43. The control unit 43 includes an identification-target-person information acquiring unit 43a, an identifying unit 43b, a biometric-information distributing unit 43c, and a biometric-information deletion processing unit 43d. The memory unit 42 stores therein biometric information 42a and distribution destination information 42b.

The communication I/F 41 is formed of a communication device such as a LAN card, and enables communication with other devices via a network such as a LAN and a WAN. For example, the communication I/F 41 transmits and receives data between the management apparatus 40 and the registration terminal 10 to transmit, for example, a result of the server identification performed by the management apparatus 40 to the registration terminal 10.

The memory unit 42 is formed of a memory device such as a nonvolatile memory or a hard disk drive. The memory unit 42 stores therein in advance, as the biometric information 42a, image information for matching in association with IDs of all users who use the biometric matching system, e.g., all employees of a business enterprise.

Furthermore, the memory unit 42 stores therein in advance, as the distribution destination information 42b, identifier of a terminal (hereinafter, described as a "terminal ID"), a terminal installation location, a terminal type indicating a representative terminal or a general terminal, information about a belonging group, and the like, for each terminal belonging to a group by assuming a predetermined business office to be one group. The distribution destination information 42b will be described later.

The identification-target-person information acquiring unit 43a is a processing unit that performs a process of acquiring the ID of a person to be identified and the captured image, which are received from the registration terminal 10, via the communication I/F 41, and sending the ID and the captured image to the identifying unit 43b.

The identifying unit 43b is a processing unit that performs a process of performing the biometric identification by matching the biometric information 42a with the ID of the person to be identified and the captured image, which are received from the identification-target-person information acquiring unit 43a, and then transmitting the identification result to the registration terminal 10.

The biometric-information distributing unit 43c is a processing unit that performs a process of distributing the biometric information 42a on the person to be identified to each terminal in the group based on the distribution destination information 42b upon reception of the biometric-information registration instruction from the registration terminal 10.

The biometric-information deletion processing unit 43d is a processing unit that performs a process of distributing a deletion instruction of the biometric information 42a on the person to be identified to each terminal in the group based on the distribution destination information 42b upon reception of the biometric-information deletion instruction from the deletion terminal 30.

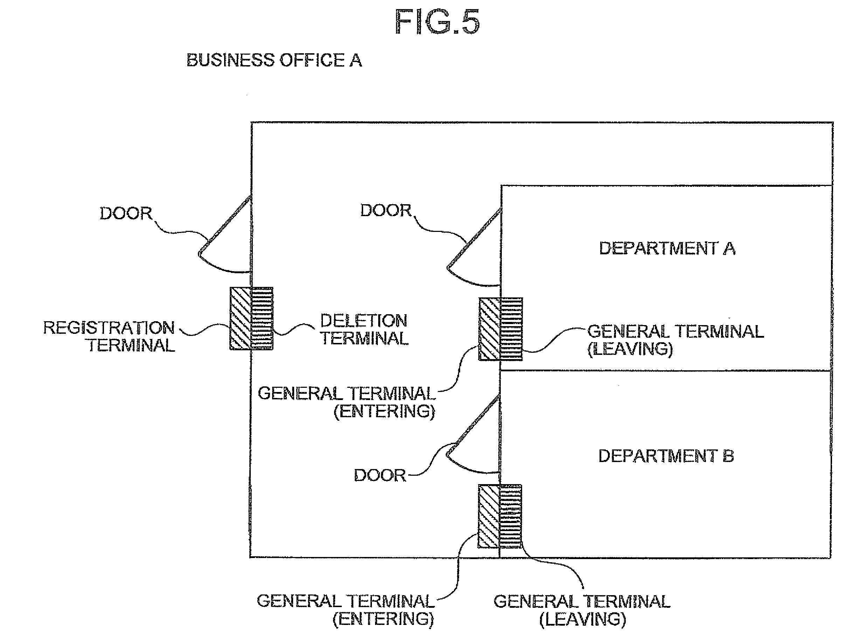

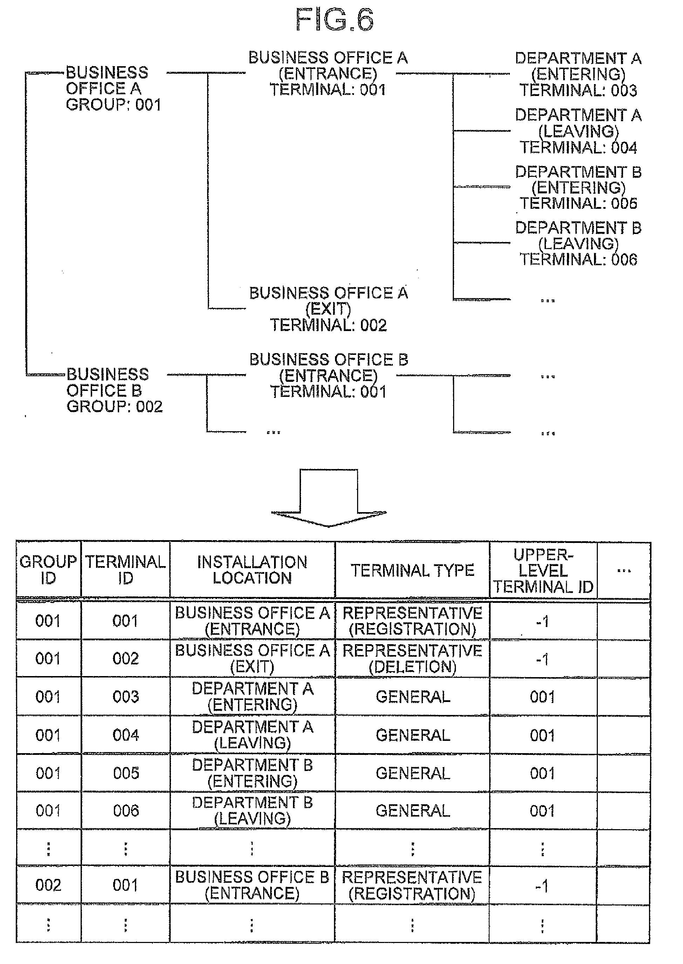

Next, examples of the system configuration of the biometric matching system in a predetermined group and the distribution destination information 42b are explained with reference to FIGS. 5 and 6. FIG. 5 is a diagram illustrating the example of the system configuration of the biometric matching system according to the embodiment. FIG. 6 is a diagram illustrating an example of the distribution destination information 42b.

As illustrated in FIG. 5, assuming that the predetermined group is the business office A, a registration terminal is installed near an entrance door to instruct registration of biometric information when a temporary user enters the business office A. Furthermore, a deletion terminal is installed near an exit door to instruct deletion of the biometric information when the temporary user leaves the business office A.

Furthermore, a general terminal for entering and a general terminal for leaving are installed near an entrance and exit door of a department A, and a general terminal for entering and a general terminal for leaving are installed near an entrance and exit door of a department B. Described below with reference to FIG. 6 is an example of the distribution destination information 42b stored in the management apparatus 40 when each terminal is installed in the business office A as described above and another business office B belonging to other group not illustrated exists.

In this example, the business office A and the business office B each belonging to a different group are illustrated, and each terminal in the business office A as described above and each terminal in the business office B are allocated hierarchically. In this case, as illustrated in the top of FIG. 6, the business office A with a group ID 001 and the business office B with a group ID 002 are allocated in parallel at the highest level.

At the lower level than the business office A with the group ID 001 is allocated a registration terminal with a terminal ID 001, which is installed at the entrance of the business office A, and, each general terminal (with terminal IDs 003 to 006) is allocated at the lower level than the registration terminal. A deletion terminal with a terminal ID 002, which is installed at the exit of the business office A, is allocated in parallel to the registration terminal.

At the lower level than the business office B with the group ID 002 is allocated a registration terminal with a terminal ID 001, which is installed at an entrance of the business office B. Other terminals are allocated similarly to the business office A, so that explanation thereof is omitted.

With this hierarchical allocation, as illustrated in the bottom of FIG. 6, the distribution destination information 42b is structured to contain a "group ID" item, a "terminal ID" item, an "installation location" item, a "terminal type" item, and an "upper-level terminal ID" item.

Accordingly, for the registration terminal in the business office A, the distribution destination information 42b contains "group ID: 001, terminal ID: 001, installation location: business office A (entrance), terminal type: representative (registration), upper-level terminal ID: nothing ("-1" is written in this example)" (see the first row of the table in the bottom of the figure).

Similarly, for the deletion terminal, "group ID: 001, terminal ID: 002, installation location; business office A (exit), terminal type: representative (deletion), upper-level terminal ID: nothing ("-1" is written in this example)" is contained (see the second row of the table in the bottom of the figure).

Furthermore, for the general terminal, e.g., for the general terminal for entering of the department A, because the upper-level terminal is set to the registration terminal (terminal ID: 001), "group ID: 001, terminal ID: 003, installation location: department A (entering a room), terminal type: normal, upper-level terminal ID: 001" is contained (see the third row of the table in the bottom of the figure).

On the other hand, the distribution destination information 42b for the registration terminal in the business office B is different from that of the terminals allocated at the lower level than the business office A in that the "group ID" becomes "002" because the group is different from that of the business office A (see the eighth row of the table in the bottom of the figure).

In this manner, by using the distribution destination information 42b, the management apparatus 40 can distribute the biometric information 42a and transmit a deletion instruction to all terminals in the business office A by identifying only the upper-level terminal when distributing the biometric information 42a on a person to be identified and transmitting the depletion, instruction.

In this example, it is assumed that the management apparatus 40 distributes the biometric information 42a on a person to be identified and transmits the deletion instruction to all terminals in a group. However, the management apparatus 40 may distribute the biometric information 42a and transmit the deletion instruction to only the representative terminal, and may also transmit the distribution destination information 42b for the group of the representative terminal.

Then, the representative terminal may transmit the biometric information 42a and the deletion instruction to all terminals in own group. With this configuration, it is possible to significantly reduce the distribution volume by the management apparatus 40, resulting in reducing the communication load on a network.

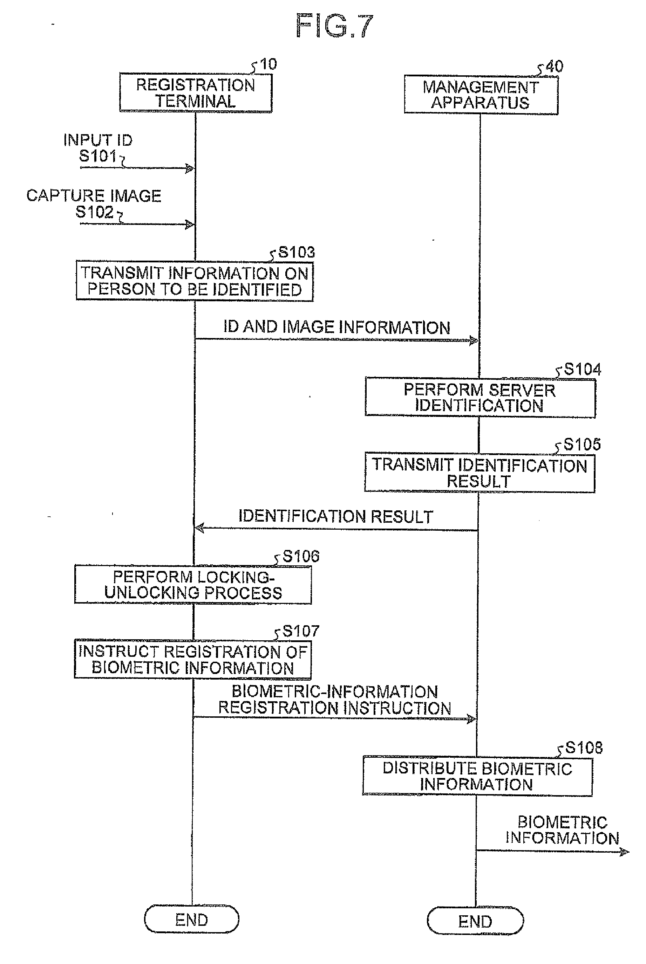

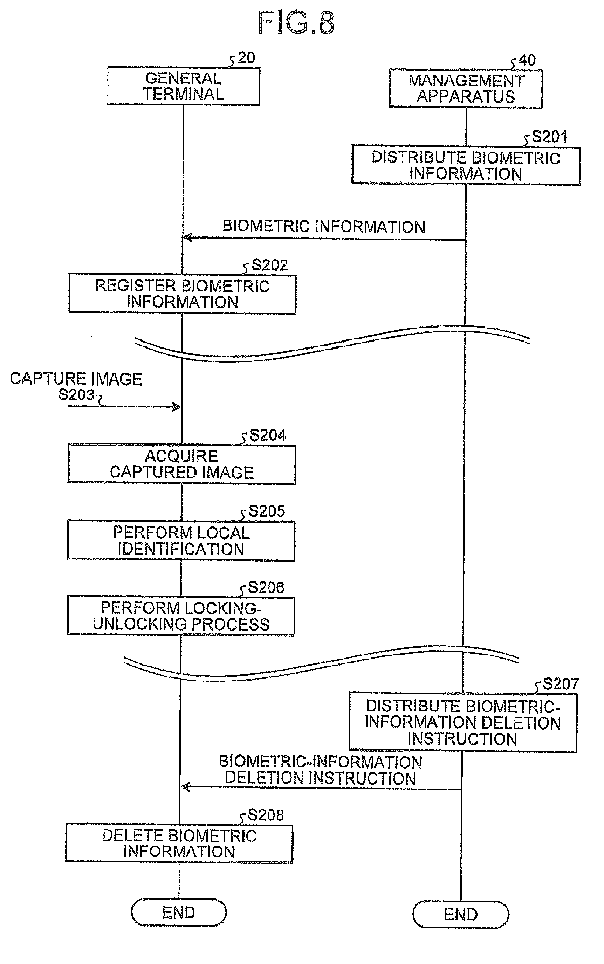

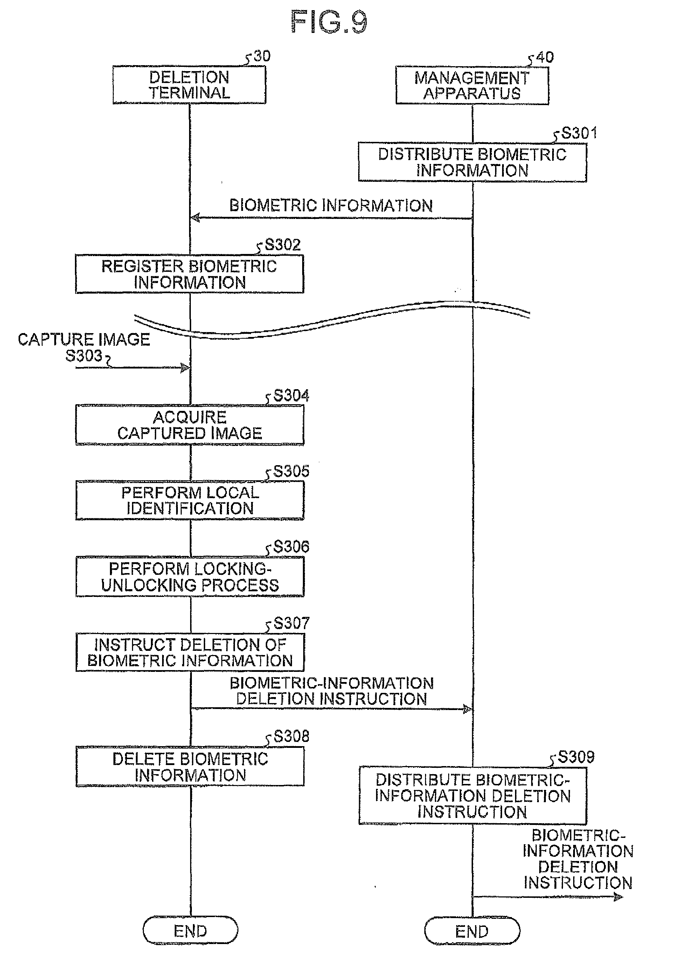

Next, process procedures performed by each terminal are explained with reference to FIGS. 7 to 9. FIG. 7 illustrates a process procedure performed by the registration terminal 10 and the management apparatus 40, FIG. 8 illustrates a process procedure performed by the general terminal 20 and the management apparatus 40, and FIG. 9 illustrates a process procedure performed by the deletion terminal 30 and the management apparatus 40.

First, FIG. 7 is a sequence diagram illustrating the process procedure performed by the registration terminal 10 and the management apparatus 40 according to the embodiment. As illustrated in the figure, the registration terminal 10 receives input of an ID of a temporary user when the temporary user enters a predetermined business office (Step S101), and captures a face image by a camera (Step S102). It is possible to omit the input of an ID in case of a full-time employee.

When determining that a person to be identified is a full-time employee based on the fact that the matching biometric information 15a for the person to be identified is stored, the registration terminal 10 performs the local identification based on the matching biometric information 15a, performs a process of locking or unlocking an entrance near the registration terminal 10 based on the identification result, and ends the series of processes.

Furthermore, when determining that the person to be identified is a temporary user, the registration terminal 10 transmits information on the person to be identified, which corresponds to the ID and the captured image, to the management apparatus 40 (Step S103), to thereby request the management apparatus 40 to perform identification. On the other hand, the management apparatus 40 performs the server identification by the "one-to-one identification method based on the received information on the person to be identified (Step S104). It is possible to perform the server identification by the "one-to-N identification" method by omitting the input of the ID.

Then, the management apparatus 40 transmits an identification result to the registration terminal 10 (Step S105). The registration terminal 10 performs a process of locking or unlocking the entrance near the registration terminal 10 based on the received identification result (Step S106).

In this example, explanation is given of a process procedure performed when the identification is successful and the temporary user is determined to be an identical person, based on the premise that the biometric information is distributed. In other words, an unlocking process is performed at Step S106 because the identification result is successful.

Subsequently, the registration terminal 10 transmits a registration instruction to the management apparatus 40 so as to register the biometric information on the temporary user in all terminals in the group (Step S107). On the other hand, when receiving the registration instruction, the management apparatus 40 distributes the biometric information 42a on the temporary user, which is stored in the memory unit 42, to all terminals in the group to which the registration terminal 10 belongs, based on the distribution destination information 42b (Step S108).

Next, the process procedure performed by the general terminal 20 and the management apparatus 40 is described with reference to FIG. 8. FIG. 8 is a sequence diagram illustrating the process procedure performed by the general terminal 20 and the management apparatus 40 according to the embodiment.

As illustrated in the figure, the management apparatus 40 distributes the biometric information 42a on the temporary user, which is stored in the memory unit 42, to all terminals in the group including the general terminal 20, based on the distribution destination information 42b (Step S201). Then, the general terminal 20 registers in advance the biometric information 42a on the temporary user, which is distributed by the management apparatus 40, in the biometric information 15a of the memory unit 15 of own terminal, as biometric information for matching (Step S202).

Subsequently, the general terminal 20 captures a face image when the temporary user enters and leaves a doorway where own terminal is installed (Step S203). Then, the general terminal 20 acquires the captured image of the temporary user (Step S204).

When acquiring the captured image, the general terminal 20 matches the captured image of the temporary user with the image information for matching stored as the biometric information 15a in the memory unit 15, and performs the local identification by the 1:N identification (Step S205).

On the other hand, the general terminal 20 performs a process of locking or unlocking the doorway near the general terminal 20 based on the identification result (Step S206). For example, when the identification is successful as a result of determination that the temporary user is an identical person, an unlocking process is performed at Step S206.

Subsequently, when the temporary user leaves, the deletion terminal 30 installed near the exit performs the local identification, and, after the identification has been successful, the management apparatus 40 distributes a biometric-information deletion instruction to all terminals in the group based on the distribution destination information 42b (Step S207).

When receiving the biometric-information deletion instruction from the management apparatus 40, the general terminal 20 deletes the matching biometric information on the temporary user from the own biometric information 15a (Step S208). Consequently, the temporary user is not to be allowed to enter and leave the room and a door is to be kept unlocked because the temporary user is to fail to the identification based on the fact that the matching information is not registered in all terminals in the group.

Next, the process procedure performed by the deletion terminal 30 and the management apparatus 40 is explained with reference to FIG. 9. FIG. 9 is a sequence diagram illustrating the process procedure performed by the deletion terminal 30 and the management apparatus 40 according to the embodiment.

As illustrated in the figure, the processes from Step S301 to Step S306 are the same as the processes from Step S201 to Step S206 performed by the general terminal 20 as described above with reference to FIG. 8, and therefore, explanation thereof is omitted.

When the local identification is successful at Step S305, i.e., when it is detected that the temporary user will leave the business office A, the deletion terminal 30 performs the unlocking process at Step S306. Then, when determining that the biometric information 15a on a person to be identified, which is stored in the memory unit 15, is registered as a temporary user, the deletion terminal 30 transmits a biometric-information deletion instruction to the management apparatus 40 (Step S307).

Furthermore, when determining that the biometric information 15a on the person to be identified, which is stored in the memory unit 15, is registered as a full-time employee, the deletion terminal 30 performs the unlocking process at Step S306, and then ends the series of processes.

Subsequently, the deletion terminal 30 deletes the matching biometric information 15a on the temporary user from the biometric information 15a of the own memory unit 15 (Step S308). On the other hand, the management apparatus 40 distributes the biometric-information deletion instruction to all terminals in the group based on the distribution destination information 42b (Step S309).

In this example, it is assumed that the deletion instruction of the biometric information on the temporary user is transmitted to the management apparatus 40 at Step S307, and the matching biometric information on the temporary user is deleted from the biometric information 15a of the own memory unit 15 at Step S308. However, it is possible to delete the information from the own biometric information 15a upon reception of the biometric-information deletion instruction from the management apparatus 40.

Furthermore, it is explained that the process is separately performed between the temporary user and the full-time employee in the process procedure performed by each terminal. However, it is possible to uniformly perform the same process as that performed for the temporary user without distinguishing the temporary user and the full-time employee.

The embodiments of the present invention are described above; however, the present invention can be embodied in various different forms other than the embodiments described above. In other words, in the embodiment, the configurations are described in which the registration terminal 10, the general terminal 20, and the deletion terminal 30 are installed in an identical business office, However, the present invention is not limited to this configuration,

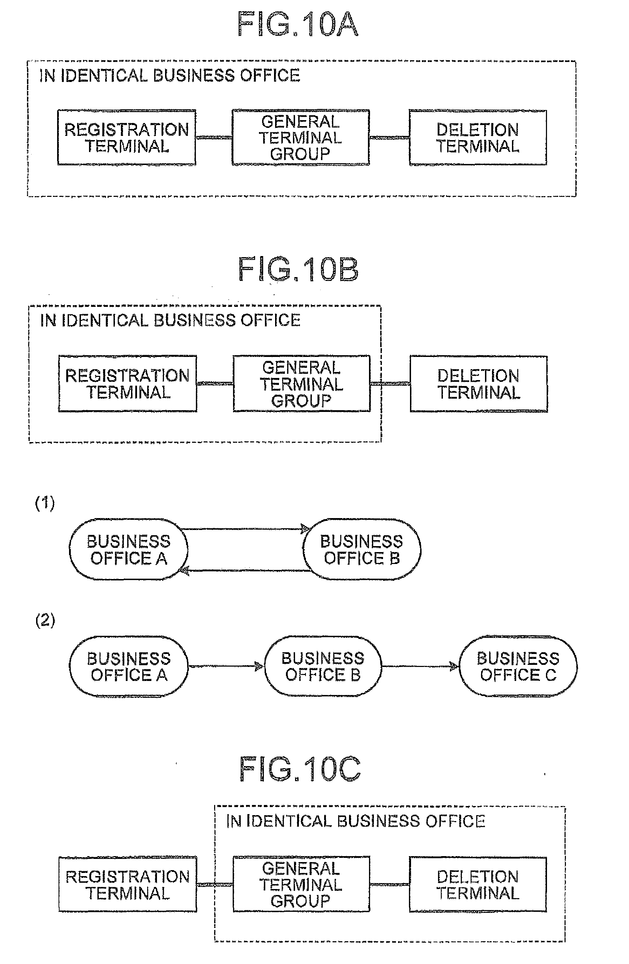

Therefore, in the following, a modified example of the configuration of each terminal is explained with reference to FIGS. 10A to 10C. FIGS. 10A to 10C are system configuration diagrams of a biometric matching system according to a modified example.

As illustrated in FIG. 10A, in the embodiment described above, the registration terminal 10, the general terminal 20, and the deletion terminal 30 are installed in an identical business office. Then, when a person leaves a predetermined business office, the deletion terminal 30 deletes the biometric information on the temporary user from all terminals in the business office.

However, as illustrated in FIG. 10B, the biometric matching system can be configured such that the registration terminal 10 and the general terminal 20 are installed in an identical business office and the deletion terminal 30 is installed in other business office. In this configuration, the deletion terminal 30 in the other business office is integrated with the registration terminal 10 and deletes the biometric information on a temporary user from each terminal in the identical business office in the figure when the identification is successful.

For example, as illustrated in (1) of FIG. 10B, the biometric matching system is useful when a full-time employee who works in a place other than the business office A and the business office B comes and goes between the business office A and the business office B. Furthermore, as illustrated in (2) of FIG. 10B, the biometric matching system is also useful when a full-time employee who works in a place other than the business office A, the business office B, and the business office C comes and goes among the business office A, the business office B, and the business office C.

More specifically, biometric information on a temporary user who leaves a predetermined business office is not deleted from all terminals in the business office, and when biometric identification for the temporary user is successful at the time the temporary user enters other business office, the registered biometric information on the temporary user is deleted from the terminals in the business office that the temporary user has visited.

For example, when a temporary user who has left the business office A visits the business office B, and if the biometric identification is successful by the representative terminal at the time the temporary user enters the business office B, deletion of the biometric information on the temporary user, which has been registered in each terminal in the business office A, is instructed.

Furthermore, because the representative terminal in the business office B instructs registration of the biometric information in each terminal in the business office B, the temporary user can perform the biometric identification by the general terminal 20 in the business office B. With this configuration, even when a destination to visit is often changed, it is possible not to reduce convenience for the temporary user and allows the temporary user to receive the identification service at a new destination to visit.

Furthermore, as illustrated in FIG. 10C, it is possible to install the general terminal 20 and the deletion terminal 30 in an identical business office and install the registration terminal 10 in other business office. In this example, a case is explained in which a full-time employee who works in a head office is to visit the business office A as a business trip.

In this case, a terminal such as a personal computer installed in the head office is equipped with a function of instructing registration of the biometric information, and an employee X inputs date and time of scheduled visit and the like in association with the business office A being a destination to visit, by using this terminal.

Then, registration of the biometric information in each terminal in the business office A is instructed by the terminal in the head office on or before the date of scheduled visit, so that biometric information on the employee X is registered in each terminal in the business office A.

Therefore, when the employee visits the business office A, it is not necessary to perform the server identification at the entrance, and it is possible to perform the local identification based on the matching biometric information registered in advance. In this manner, it is possible to further improve the convenience of the face identification system that is able to perform non-contact identification.

Furthermore, in the above-mentioned embodiments, it is assumed that the biometric information on a temporary user, which is registered in the terminal in the business office, is deleted when either the user leaves a business office or the user visits and enters other business office. However, the present invention is not limited to this example.

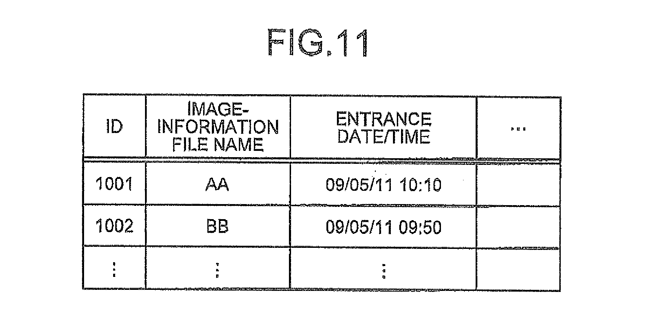

Therefore, in the following, a modified example of the biometric information 15a registered in each terminal in the business office is explained with reference to FIG. 11. FIG. 11 is a diagram illustrating an example of the biometric information 15a.

In the embodiment described above, it is explained that the image information for matching to be compared is registered as the biometric information 15a. However, as illustrated in the figure, the biometric information 15a of the modified example contains an "ID" item and a "entrance date/time" item in addition to an "image-information file name" item.

The ID is an identifier of an employee, e.g., an employee number and the like. The ID is not necessarily registered; however, when an ID is input by an employee, each terminal can perform the local identification by the "1:1 identification, so that processing speed of the biometric identification can be increased.

The image-information file name is provided to register a file name of image information for matching so as to perform matching by comparing similarities between a captured image and the image information for matching. However, when comparison is performed by using the feature amount based on the image information (matching feature data), it is possible to register the "matching feature data".

The entrance date/time is provided to register, by a temporary user, date and time when the biometric identification is performed by the identification terminal near the entrance of the business office. It is possible to delete the matching biometric information after a predetermined time elapses since the entrance date/time.

In this case, it is possible to prevent a situation in which the biometric information is deleted when a user temporarily goes out for lunch for example and then the server identification is requested again when the user reenters the room. Therefore, it is possible to flexibly cope with the action of a temporary user, and it is also possible to significantly reduce time and communication load related to the identification when a temporary user enters a room again within a predetermined time period.

Furthermore, it is possible to register "exit date/time" indicating date and time when the deletion terminal 30 performs the biometric identification instead of the "entrance date/time" item contained in the biometric information 15a of the modified example. In this case, it is possible to delete the matching biometric information after a predetermine time elapses since the exit date/time.

In this case, in the process procedure performed by each terminal such that the temporary user and the full-time employee are distinguished from each other as described above, it is possible to uniformly perform the same process as performed for the temporary user without distinguishing the temporary user and the full-time employee.

As described above, according to the embodiment, when a temporary user who has visited a place in which the temporary user does not work full-time, e.g., the business office A, enters the business office A, the registration terminal 10 performs the server identification of the temporary user by the "one-to-one identification method or the "one-to-N identification" method.

Then, when the identification of the temporary user is successful, the registration terminal 10 performs unlocking and registers the biometric information on the temporary user in all identification terminals in the business office A. Therefore, the temporary user can perform the local identification by using the general terminal 20 in the business office A by the 1:N identification.

Furthermore, when the user leaves the business office A, the deletion terminal 30 deletes the biometric information on the temporary user from all identification terminals in the business office A. Therefore, it is possible to reduce the memory capacity needed in each identification terminal, and increase processing speed of biometric identification without reducing the convenience for a person to be identified.

In the appended claims, an identification terminal device corresponds to the registration terminal 10, the general terminal 20, and the deletion terminal 30, a server device corresponds to the management apparatus 40, a group-information storage unit corresponds to the distribution destination information 42b, a registration control unit corresponds to the biometric-information distributing unit 43c, and a deletion control unit corresponds to the biometric-information deletion processing unit 43d and the biometric-information deleting unit 16h.

In the embodiments described above, it is explained that an image of a face of a person to be identified is captured and the biometric identification is performed by the face identification. However, the identification can be performed based on other physical features, e.g., a tone value of a capillary pattern of retina of eye or an iris pattern. It is also possible to provide a voice receiving equipment to perform identification based on received voiceprint.

Furthermore, it is possible to perform identification based on behavioral features, such as blink or movement of the lip. With this configuration, it is possible to prevent fraudulent acts by identity theft, which is that the face identification is performed by using a face photograph brought by a person other than an identical person, without losing the advantage of the biometric matching system that allows non-contact identification.

Furthermore, it is explained in the above embodiment that one group in the distribution destination information 42b corresponds to one business office. However, the one group need not correspond to one business office, one business place, or one building. It is possible to further divide each of them to make one group. In this case, the distribution volume for distributing the biometric information on the temporary user can be reduced, so that it is possible to reduce communication load on a network.

Furthermore, the distribution destination information 42b can be stored for each group or each employee, together with information about permission to enter a room. In this case, it is possible to limit a distribution destination of the biometric information on the temporary user to an arbitrary range, so that it is possible to flexibly make settings for managing employees entering and leaving a high-security department which restricts the entrance of employees.

While the matching biometric information 15a for full-time employees in each group is stored in advance in each terminal in the group, it is sufficient to store in advance, in the memory unit 15, the biometric information 15a on the full-time employees belonging to the divided groups. Therefore, it is possible to reduce the memory capacity of each terminal. This configuration is useful for each terminal located where the number of full-timer employees becomes large, such as the head office.

Moreover, in the embodiment described above, when a temporary user enters a destination to visit, the management apparatus 40 performs the server identification, and, when the identification is successful, the biometric information on the temporary user is distributed by acquiring it from the biometric information 42a stored in the management apparatus 40.

However, it is possible to send the biometric information on the temporary user between representative terminals in each business office connected to the network when the user leaves a predetermined business office and visits other business office. With this configuration, a temporary user can always perform the local identification in performing the identification, so that the management apparatus 40 is not needed.

More specifically, when a temporary user visits the business office A and performs the identification request by the representative terminal in the business office A, and if the identification is successful, the biometric information is distributed to all terminals in the business office A including the representative terminal, and the biometric information is registered in association with an ID of the temporary user. In this case, it is assumed that the representative terminal in each business office stores distribution destination information of all terminals in own business office.

Then, when the temporary user leaves the business office A, visits the business office B, and performs the identification request by the representative terminal in the business office B, he/she performs the identification by the 1:1 identification by inputting own ID. At this time, the representative terminal in the business office B performs a search to detect whether the biometric information on the temporary user is registered or not in any one of the representative terminals connected to the network, based on the input ID.

Then, the representative terminal in the business office B transfers the biometric information on the temporary user from the representative terminal in which the biometric information on the temporary user is registered, i.e., from the representative terminal in the business office A in this example, to the representative terminal in the business office B.

The representative terminal in the business office B performs the local identification by comparing the biometric information on the temporary user with the image information of an imaged face of a person to be identified. When the identification is successful, the representative terminal distributes the biometric information to all terminals in the business office B, and registers the biometric information in association with the ID of the temporary user.

With this configuration, the management apparatus 40 need not store therein the biometric information on all employees, and the server identification by the management apparatus 40 is not needed. Therefore, it is possible to significantly reduce costs necessary for equipments including a large-capacity memory device of the management apparatus 40. Furthermore, because only the local identification is performed, processing speed for the biometric identification can be increased.

Furthermore, in the embodiment described above, it is explained that one registration terminal 10 or one deletion terminal 30 is installed in the business office. However, a plurality of the representative terminals can be installed in the business office. When the business office has a large site, doorways may be arranged at various locations in the business office.

In other words, it is possible to install a plurality of representative terminals at all doorways in the business office. With this configuration, a temporary user can use the nearest doorway when he/she enters and leaves the business office, so that convenience can be improved.

Moreover, in the embodiment described above, the identification apparatus for a person entering and leaving a room is explained. However, the present invention is not limited to this example. For example, the present invention may be applied to a personal computer that is connected to a management apparatus and that handles confidential documents, or a cash processing terminal installed at teller windows in banks.

More specifically, when biometric information on a temporary user is distributed to all identification terminals in a business office, the biometric information is also distributed to a personal computer that is installed in the business office and that handles confidential documents or to a processing terminal that is installed at a teller window in a bank and that performs cash dispense/deposit processing.

It is also possible to mount a camera on the personal computer and the cash processing terminal to perform the biometric identification at the time of login to each terminal. Consequently it is possible to prohibit a person other than a person who has use authority to the terminal from performing operation. Therefore, it is possible to prevent leakage of the confidential documents and fraudulent cash deposit/dispense processing. As a result, it is possible to ensure the security of banks and business enterprises in which the present invention is introduced.

As described above, the biometric matching system according to the present invention is useful for performing biometric identification when an employee visits a business office different from a business office in which he/she works full-time. In particular, the biometric matching system according to the present invention is suitable for suppressing memory capacity necessary for each identification terminal and increasing processing speed of the biometric identification without reducing convenience for a person to be identified.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A biometric matching system for performing a matching between biometric information acquired from a person to be identified and biometric information for matching, the biometric matching system comprising:
an identification terminal device for acquiring the biometric information from a person to be identified;
a server device for storing therein the matching biometric information registered in advance;
a group-information storage unit (42b) for storing therein group information indicating a pre-defined group to which the identification terminal device belongs;
a registration control unit (43c) for registering, when a predetermined registration condition is satisfied, matching biometric information on a specific person to be identified in an identification terminal device belonging to a predetermined group based on the group information; and
a deletion control unit (43d) for deleting, when a predetermined deletion condition is satisfied, the matching biometric information registered in the identification terminal device by the registration control unit (43c).

2. The biometric matching system according to claim 1, wherein
when the matching between the biometric information acquired by the identification terminal device and the matching biometric information is successful, the registration control unit (43c) registers the matching biometric information on the person to be identified from whom the biometric information is acquired, in another identification terminal device belonging to a same group of the identification terminal device.

3. The biometric matching system according to claim 1 or 2, wherein
when receiving a registration instruction from a predetermined terminal device or the identification terminal device, the registration control unit (43c) registers the matching biometric information on a person to be identified who has been specified by the registration instruction, in an identification terminal device belonging to a group specified by the registration instruction.

4. The biometric matching system according to any one of claims 1 to 3, wherein
the deletion control unit (43d) deletes matching biometric information on a person to be identified, the person for whom the registration control unit (43c) has registered the biometric information in an identification terminal device belonging to a predetermined group, from the identification terminal device belonging to the predetermined group when the matching is successful in a predetermined identification terminal device belonging to the predetermined group or when the matching is successful in a predetermined identification terminal device belonging to a group other than the predetermined group.

5. The biometric matching system according to any one of claims 1 to 4, wherein
the deletion control unit (43d) deletes matching biometric information on a person to be identified, the person for whom the registration control unit (43c) has registered the matching biometric information in an identification terminal device belonging to a predetermined group, from the identification terminal device belonging to the predetermined group when a predetermined time elapses since the matching biometric information has been registered or when a predetermined time elapses since last matching using the matching biometric information has been performed.

6. A biometric matching method for matching between biometric information acquired from a person to be identified by an identification terminal device and biometric information for matching stored in a server device, the biometric matching method comprising:
storing group information indicating a pre-defined group to which the identification terminal device belongs;
registering, when a predetermined registration condition is satisfied, matching biometric information on a specific person to be identified in an identification terminal device belonging to a predetermined group based on the group information; and
deleting, when a predetermined deletion condition is satisfied, the matching biometric information registered in the identification terminal device at the registering.
